Europäisches Patentamt

(19) European Patent Office

Office européen des brevets

(11) Publication number: **0 282 250 B1**

(12) **EUROPEAN PATENT SPECIFICATION**

(51) Int. Cl.⁵: $C05F\ 11/02$

(45) Date of publication of patent specification:
**19.06.91 Bulletin 91/25**

(21) Application number: **88301954.9**

(22) Date of filing: **07.03.88**

(54) **Liquid crop stimulant.**

(30) Priority: **09.03.87 US 23614**
**16.02.88 US 150761**

(43) Date of publication of application:
**14.09.88 Bulletin 88/37**

(45) Publication of the grant of the patent:
**19.06.91 Bulletin 91/25**

(84) Designated Contracting States:
**AT BE CH DE ES FR GB GR IT LI NL SE**

(56) References cited:
**EP-A- 0 164 908**
**FR-A- 2 041 748**
**US-A- 3 377 152**

(56) References cited:
**CHEMICAL ABSTRACTS, vol. 102, no. 7, February 1985, page 534, abstract no. 61442s, Columbus, Ohio, US; R. ALYUTDINOVA et al.: "Coal as raw material for the preparation of humic substances increasing the yield of farm crops" & KOKS KHIM. 1984, (12), 37-9**

(73) Proprietor: **AMERICAN COLLOID COMPANY**
**One North Arlington, 1500 West Shure Drive**
**Arlington Heights, Illinois 60004 (US)**

(72) Inventor: **Alexander, William**
**242 Terrance**
**Naperville Illinois 60540 (US)**

(74) Representative: **Wain, Christopher Paul et al**
**A.A. THORNTON & CO. Northumberland House 303-306 High Holborn**
**London WC1V 7LE (GB)**

EP 0 282 250 B1

## Description

The present invention relates to a method of improving the yield of various agricultural and horticultural crops. More particularly, the present invention relates to a method of improving the yield of agricultural and horticultural crops by utilizing a liquid comprising a water-soluble alkali metal salt of humic acid and a plant nutrient component including plant nutrients such as nitrogen and/or phosphorous and/or potassium and/or either calcium phosphate or ascorbic acid. The water-soluble alkali metal salt of humic acid, particularly the potassium salt of humic acid, when applied in conjunction with the plant nutrient component, has demonstrated an unexpected ability to increase crop yields, both in regard to the number of fruit per plant and in regard to the size of the individual fruit. Surprisingly, the combination of a water-soluble alkali metal humic acid salt and a plant nutrient component including plant nutrients such as nitrogen and/or phosphorous and/or potassium and/or either calcium phosphate or ascorbic acid showed a synergistic increase in crop yields compared to crop yields obtained using either the alkali metal humic acid salt or the plant nutrient component alone and compared to crop yields obtained using a mixture including the water-soluble alkali metal humic acid salt and both the calcium phosphate and the ascorbic acid.

## BACKGROUND OF THE INVENTION

Soil humus, consisting of organic residues from the decomposition of plant matter, is known as an important soil constituent for enhancing the growth of plants. The formation of soil humus depends upon an adequate supply of raw organic residues and upon suitable conditions for their decomposition. Should either condition be lacking, the eventual decrease in soil humus content leads to reduced soil fertility. In these cases, the addition of organic matter is necessary to increase the fertility of the soil.

Humic acid, defined as the portion of soil humus that is soluble in alkaline solution, but insoluble in acid solution, is the form of organic matter that often is added to the soil to increase fertility. Humic acid is found in rotting vegetable matter and can be detected in the black slime of an ordinary compost pit in a home garden. It also is found in the brown organic matter of a variety of soils, as well as in peats, manure, lignite, leonardite and brown coals. Humic acid does not have a single unique structure, but is a mixture of intermediate chemical products resulting from the decomposition and conversion of lignin and other plant materials to hard coal. Humic acid apparently is formed by the bacterial and chemical degradation of plant tissue, but in soils it also can be formed by certain secondary processes such as polymerization of polyphenols leached by rain from surface leaf litter, and condensation of phenols, quinones, and proteins that are provided by the action of soil microorganisms and small animals on soil carbohydrates. As a result, humic acid is best characterized in terms of its origin and soil environment, rather than in rigid terms of chemical composition or chemical properties.

Humic acid has been used either as a soil amendment or as a fertilizer component to increase the fertility of soils. For instance, in U.S. Patent Nos. 3,111,404, 3,264,084 and 3,544,295, Karcher discloses a complex and expensive method of producing a dry ammonium humate fertilizer by treating a humic acid-bearing ore, such as leonardite, first with phosphoric acid, then with ammonia, in order to extract the humic acid content. Burdick, in U.S. Patent No. 2,992,093, teaches a similar extraction process yielding dry humates useful as soil conditioners and fertilizers. Particulate ammonium humate fertilizers are disclosed by Cooley in U.S. Patent No. 3,418,100.

Another method of extracting humic acid from a humic acid-bearing ore is disclosed in U.S. Patent No. 3,770,411 to Chambers, whereby a liquid humate product is obtained by reacting the ore with ammonia, then with phosphoric acid and, if desired, micronutrient elements. Schwartz et al in U.S. Patent No. 3,398,186 discloses using either an aqueous sulfate salt or a caustic soda solution as the extracting solution, followed by acidification to yield humic acid. In U.S. Patent No. 3,076,291, Gardner teaches using ammonium, potassium, or sodium hydroxide to produce a humic acid-based seed germination promoter. Firth, in U.S. Patent Nos. 4,274,860 and 4,321,076, discloses utilizing a humate derived from rutile sand deposits to stimulate growth in foliage plants. U.S. Patent No. 4,319,041 to Goff discloses a method of forming a liquid humic acid product by mixing a humic acid-bearing ore, such as leonardite, with water and caustic soda.

The methods and compositions disclosed in the prior art are generally difficult and/or impractical to prepare and use. The disclosed methods are complex, involve large and expensive machinery, and usually produce granular materials. The prior art methods for producing the granular humates further suffer in that a substantial amount of the micronutrient elements essential to plant growth are extracted and removed during processing of the humic acid-bearing ore to a granular humic acid product. Methods of producing granular humates are also expensive, time-consuming, and require extra machinery to dry the humic acid product before packaging and use.

Therefore, it is highly desirable to provide a liquid humate product and thereby take advantage of easier

EP 0 282 250 B1

storage, shipment, use and handling of a liquid product, of avoiding the extra step and cost of drying the product, and of direct application of the humate product by systems such as irrigation and spraying systems. However, the prior art methods of making liquid humates possess the serious disadvantages of low solids content and the presence of inactive and insoluble constituents. Consequently, several of the commercially available liquid humate products are only partially comprised of active humic acid solids, with the remainder of the advertised solids being inactive water-soluble constituents or inactive water-insoluble constituents that often plug irrigation and spray equipment.

Accordingly, it would be advantageous to provide a method of producing a highly concentrated aqueous solution of humates, such that insoluble constituents are minimized or eliminated and such that the solids content of the liquid is predominantly comprised of active humic acid salts as opposed to inactive soluble constituents. It also would be extremely advantageous to incorporate other additives, such as a plant nutrient component, into the liquid alkali metal humate product to dramatically increase the effects of the humate salt upon agricultural and horticultural crops. As a result, the amount of humate-containing product applied to the crop could be reduced in order to obtain the same crop yield, or the unreduced amount of humate-containing product could be applied to obtain superior crop yields.

Any method utilising a liquid alkali metal humate in combination with additives to synergistically increase the effect of the humate would enhance and broaden the use of liquid humates in the agricultural and horticultural areas. Preferably any such method should utilise an economical, easy-to-manufacture liquid humate product possessing qualities that positively affect crop yield, such as number of fruit per plant and size per individual fruit.

According to the present invention, there is provided a liquid crop stimulant comprising from about 10% by weight to about 15% by weight of an alkali metal salt of humic acid ; from about 0.05% by weight to about 50% by weight of a plant nutrient ; and water ; characterised in that the alkali metal salt of humic acid is obtained only by the alkali metal hydroxide treatment of an oxidised humic acid containing ore.

Embodiments of the invention will best be understood by reference to the following specification taken in connection with the accompanying drawings, in which :

FIG. 1 is a proposed structure of humic acid ;

FIG. 2 is the chemical structure of humic acid showing the oxidation sites available for adsorption of plant nutrients and micronutrients ; and

FIG. 3 is the chemical structure of oxidised humic acid saturated with potassium ions and a list of cations showing their relative exchange preference with humic acid.

In brief, the present invention is directed to a method of improving the yield of agricultural and horticultural crops by utilising a mixture comprising a water-soluble alkali metal salt of humic acid and a plant nutrient component including such plant nutrients as nitrogen and/or phosphorus and/or potassium and/or either calcium phosphate or ascorbic acid. Surprisingly, it has been found that both the number of fruit per plant and the size per individual fruit are unexpectedly increased by applying a synergistic amount of a plant nutrient component together with a water-soluble alkali metal humate salt to the growth medium or seed germination medium of the crop.

A water-soluble alkali metal humate salt, formed from a humate-bearing ore, in combination with a synergistic amount of a plant nutrient component, can improve the crop yield of agricultural and horticultural crops. In regards to economics, ease of manufacture, ease of application and degree of improvement in crop yields, the method is especially effective when the water-soluble alkali metal humate salt and the plant nutrient component, including plant nutrients such as nitrogen and/or phosphorus and/or potassium and/or either calcium phosphate or ascorbic acid, is applied to the crop simultaneously as a mixture in the liquid form.

Therefore, the present invention is directed to a method of improving the crop yields of agricultural and horticultural crops with a liquid, water-soluble alkali metal humate salt in combination with a synergistic amount of a plant nutrient component. A liquid mixture comprising a water-soluble alkali metal humate salt and a plant nutrient component, including plant nutrients such as nitrogen and/or phosphorus and/or potassium and/or either calcium phosphate or ascorbic acid applied to the growth medium or seed germination medium of the crop, surprisingly and unexpectedly exhibits increased crop yields for agricultural and horticultural plants compared to using a solution of the water-soluble alkali metal humate salt alone or using a solution of the plant nutrient component alone. Further, it is even more surprising that utilizing a solution of the alkali metal humate salt in combination with both calcium phosphate and ascorbic acid did not produce the increased crop yields observed by using a solution of the alkali metal humate salt in combination with either calcium phosphate or ascorbic acid.

More particularly, the present invention is directed to a method of improving the crop yields of agricultural and horticultural crops utilizing about a 10% by weight to about a 15% by weight, and preferably about a 12% by weight, aqueous solution of an alkali metal humic acid salt that further includes from about 0% to about 20%

3

by weight of nitrogen (calculated as N) and/or from about 0% to about 45% by weight phosphorus (calculated as $P_2O_5$) and/or from about 0% to about 20% by weight of potassium (calculated as $K_2O$) and/or either from about 0.05% to about 2.0% by weight or calcium phosphate or from about 0.05% to about 2.0% by weight ascorbic acid, and preferably from about 0.15% to about 1.0% by weight of either calcium phosphate or ascorbic acid as a plant nutrient component. Generally, the ratio of ascorbic acid or calcium phosphate to water-soluble humic acid salt ranges from about 1 : 300 to about 1 : 5, and preferably from about 1 : 100 to about 1 : 10.

Compared to alkali metal humate salt solutions used alone, or plant nutrient component solutions used alone, the composition has demonstrated a superior ability to increase the yield of agricultural and horticultural crops. The alkali metal humic acid salt solution, further including such plant nutrients as nitrogen and/or phosphorus and/or potassium and/or either calcium phosphate or ascorbic acid, is generally applied to the crop as an aqueous solution including 1% by weight of the alkali metal humic acid salt. The aqueous solution is applied at a dosage rate such that the amount of alkali metal humic acid salt, calculated on a dry weight basis, does not exceed 10 lbs. of dry humic acid per acre. Exceeding this dosage rate may adversely affect the crop.

Without being limited to any particular theory or mechanism, it is suggested that the improved crop yield results are partially due to the method of manufacturing the alkali metal humic acid salt. This particular method of manufacturing an aqueous solution of an alkali metal humic acid salt provides a high percentage of active humate of up to about 15% by weight, without the formation of an appreciable amount of inactive water-soluble solids or inactive water-insoluble material, at a pH sufficient to attain maximum humate solubility and maximum stabilization of the hydrocolloidal alkali metal humic acid salts. The subsequent incorporation of a synergistic amount of a plant nutrient component into the aqueous alkali metal humic acid salt solution further increases the agricultural and horticultural crop yields, both in regard to number of fruit per plant and in regard to size of individual fruit, compared to crop yield increases observed using a solution of the liquid alkali metal humate salt alone or to a solution of the plant nutrient component alone.

The water-soluble alkali metal humic acid salt may be manufactured according to a method whereby the alkali metal humic acid salt is available as a concentrated solution of an alkali metal humic acid salt containing essentially no inert insoluble or insert soluble material.

A method of increasing the yield of agricultural and horticultural crops utilizes a concentrated aqueous solution comprising an alkali metal humic acid salt and a synergistic amount of a plant nutrient component including such plant nutrients as nitrogen and/or phosphorus and/or potassium and/or either calcium phosphate or ascorbic acid.

A concentrated solution comprises an alkali metal humic acid salt and a synergistic amount of a plant nutrient component including such plant nutrient as nitrogen and/or phosphorus and/or potassium and/or either calcium phosphate or ascorbic acid, of sufficiently high pH to maximize alkali metal humic acid salt solubility and stability.

The liquid crop stimulant may increase the yield of agricultural and horticultural crops both in regard to the number of fruit per plant and in regard to the size of each individual fruit.

The liquid plant stimulant may be manufactured from readily available ores, containing a large percentage of active humic acid, by an easy and economical process to yield a concentrated, aqueous alkali metal humic acid salt solution.

The method for increasing the crop yield of agricultural and horticultural crops may be by providing an aqueous solution of an alkali metal salt of humic acid, including a synergistic amount of a plant nutrient component. including such plant nutrients as nitrogen and/or phosphorus and/or potassium and/or either calcium phosphate or ascorbic acid, and which can be applied at relatively low application rates to afford improved results in root growth, color, growth rate, and seed germination in a relatively short period of time.

Soil humus, because of its humic acid content, is an important soil constituent for enhancing the growth of plants. Humic acid promotes crop production by acting to bind sandy soils, loosening clayey soils, increasing the moisture-holding capacity of the soil, resisting the eroding action of wind, water and cultivation, storing and releasing macronutrient and micronutrient elements to the plants, and providing the conditions needed for optimal micro-organism growth. Overall, humic acid-containing humus offers the best medium for plant growth. Therefore, for soils deficient in humic acid, it is necessary to add various forms of organic matter to enhance the ability of the soil to act as a growth medium.

One of the most common organic adjuvants added to soil is humic acid itself. Although humic acid is derived from several sources, such as lignite, leonardite, peat and manure, the preferred source of humic acid is leonardite. Leonardite, usually found in ore deposits that overlay lignite coal deposits, is a highly oxidized form of lignite containing a higher oxygen content than lignite. The areas of greatest lignite coal oxidation lie along the outcrops at the surface of the leonardite overlay, and it is humic acid derived from these highly oxidized outcrops that are used most advantageously in the method of the present invention. These highly oxidized leonardite ores yield humic acid of a very high activity, making the ores an ideal raw material since the humic acid can

4

be extracted with the best cost/benefit ratio.

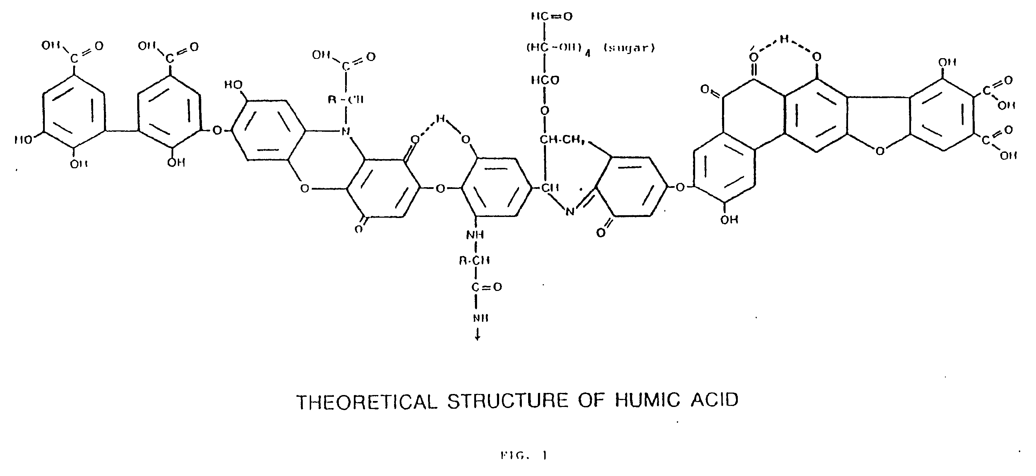

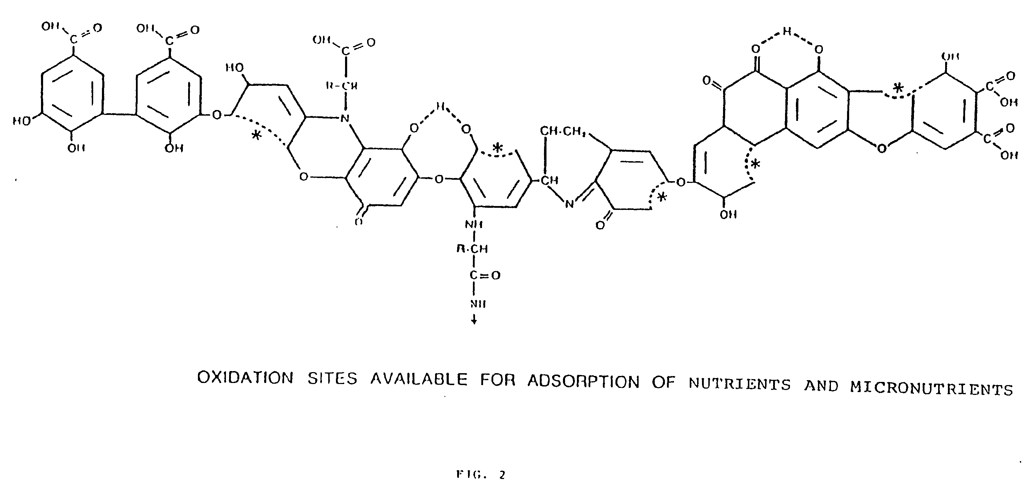

The North Dakota leonardite used to obtain the humic acid used in the method of the present invention is defined by the U.S. Bureau of Mines as "essentially salts of humic acids". The humic acid derived from this North Dakota leonardite differs from the theoretical formula of humic acid illustrated in FIG. 1 because part of the humic acid structure has been oxidized, leaving sites for cation absorption by the resultant negative charge. This oxidized structure is generally illustrated in FIG. 2, wherein the oxidized sites are depicted by asterisks.

Chemical studies of the composition of leonardite have revealed that it is mainly composed of the mixed salts of acid radicals found in soil humus, a product of the decay of organic matter that contains both humic and nonhumic material. Such acid radicals are collectively termed "humic acids", having individual fractions named humin, humic acid, ulmic acid and fulvic acid. The exact structure of the humic acids are unknown. However, humic acids appear to be associations of molecules forming aggregates of elongated bundles of fibers at low pH, and open flexible structures perforated by voids at high pH. These voids, of varying dimensions, trap organic or inorganic particles of appropriate electronic charge.

The humic acids have a large cation exchange capacity and hold monovalent and multivalent elements, such as macronutrient and micronutrient elements, very strongly. The molecular weight of the humic acids range from 800 to 500,000, with the weight average molecular weight ranging from about 5,000 to about 50,000. The cation exchange capacity of the humic acids varies from about 200 to about 600 meq $CaCO_2$ per 100 grams at pH 7, depending upon the origin of the extracted acids. Humic acids are polyelectrolytes and are believed to form complexes with clay particles thus enabling humic acids to bind monovalent and multivalent elements with great tenacity. When the cation exchange sites on the humic acid molecule are filled predominantly with hydrogen ions, the material, considered to be an acid, is insoluble in water. However, when the predominant cations at the exchange sites are other than hydrogen, the material is called a "humate". Humates of the monovalent alkali metals or ammonia are soluble in water, but the humates of most multivalent metals are insoluble.

Humic acids in the form of their ammonium salts are soluble in water and when mixed with soil, have been found to promote plant growth. Specifically, the ammonium humates increase root growth and root formation, deepen the color of leaves, flowers and fruit, increase branching at high application rates, and increase the volume of fruit obtained.

Such beneficial effects on plant growth make ammonium humates highly desirable. However, the ammonium salts of humic acid tend to lose ammonia via evaporation, leaving the insoluble humic acid behind. As a result, ammonium humate solutions do not possess the stability to make them viable as concentrated liquid growth-stimulating products. Therefore, a non-volatile alkali metal cation is used to neutralize the humic acid and to produce a stable, concentrated liquid plant growth stimulant, based on a water-soluble form of humic acid.

Leonardite in its natural state is composed predominantly of insoluble calcium, iron and aluminum humates. The calcium content of leonardite is high, and accordingly, treatment with materials that remove the calcium and form inorganic, insoluble calcium salts increases the water-solubility of the humate. Although leonardite is an abundant source of humic acid, its utilization as a humic acid raw material has been limited due to the lack of a simple, efficient means of converting its humic acid content into soluble forms.

Previous attempts to extract the humic acid content of leonardite have involved inefficient and unsatisfactory processes. Usually the leonardite was made colloidal by ammoniation. However, with ageing, the ammonia evaporated and the humic acid content again became insoluble. Additionally, the processing of the leonardite involved numerous steps, including separation of any insoluble material by a filtration process requiring the addition of large amounts of water, i.e., establishment of a slurry, thus necessitating the subsequent removal of relatively large volumes of water.

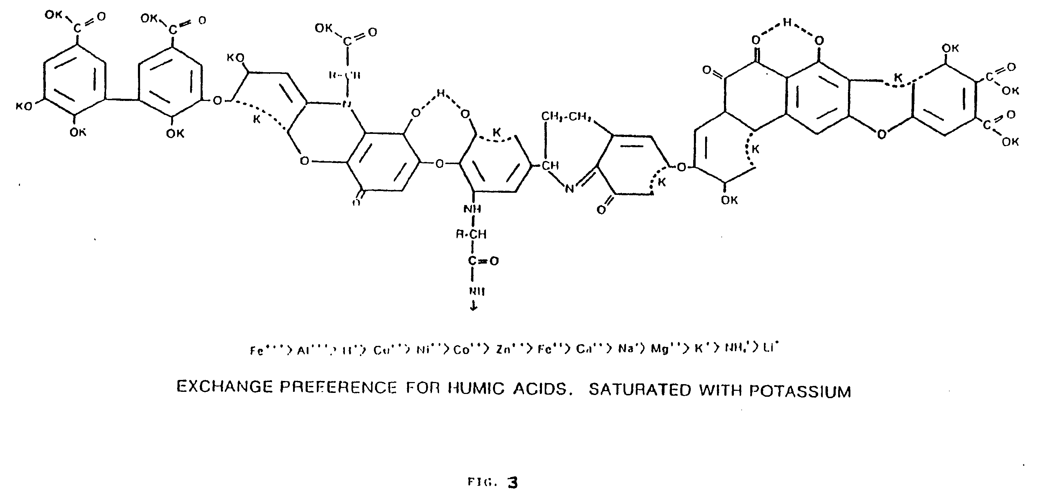

The oxidized sites of humic acid may be filled with non-volatile alkali metal ions that maintain the water-solubility of the humate salt. In particular, to produce a water-soluble alkali metal salt of humic acid that is suitable to enhance plant growth, leonardite is treated with an alkali metal hydroxide, such as lithium hydroxide, potassium hydroxide or sodium hydroxide. To achieve the full advantage of the present invention, the humic-acid bearing leonardite ore is treated with potassium hydroxide. By this method the oxidized sites of the humic acid are saturated with readily ion-exchangeable, nonvolatile alkali metal ions, such as potassium ions. In addition, using an alkali metal hydroxide to solubilize the humic acid allows the pH to be increased to the range of approximately 11, such that the maximum solubility of the humic acid salt is attained, and such that the humic acid hydrocolloids are stabilized in solution. The fully potassium-saturated humic acid structure, and the relative exchangeability of the cations found in the soil are illustrated in FIG. 3. The relative position of potassium shows that it will readily exchange with the secondary nutrient and micronutrient ions in the soil such as calcium, iron, aluminum, copper, nickel, cobalt, zinc and iron. By cation exchange of the potassium ion for the secondary nutrient and micronutrient element ions, the secondary nutrient and micronutrient elements then are available for uptake by the plant along with the humic acid. In addition, by exchanging the potassium ions for the secondary nutrient and micronutrient ions present in the soil, the released potassium ions of the humate salt provide the further benefit of introducing a primary nutrient into the soil.

The source of leonardite used to produce the water-soluble alkali metal salt of humic acid is important in that the leonardite should contain a high percentage of active humic acid. All humic acid-bearing ores contain inactive ingredients such as clay, shales gypsum, silica and fossilized organic matter. However, it is desirable to minimize the amount of inactive materials present in the ore. It has been found that the percentage of inactive ingredients is lowest for ores mined from North Dakota leonardite deposit outcrops. For these humic acid-bearing ores, the contaminants account for only approximately 15% by weight of the humic acid-bearing ore. However, the remaining 85% by weight of the ore is not all recoverable humic acid. Some of the humic acid content is irreversibly combined with crystallized minerals, and some of the humic acid is polymerized into insoluble molecules, such as the heavier molecular weight analogs of humic acid, like ulmic acid and humin. Usually, approximately 50% dry weight of the humic acid-bearing ore can be converted into active humic acid. This is a relatively high percentage and is accomplished by adding an oxidizing agent, such as an aqueous solution of hydrogen peroxide, in addition to an alkali hydroxide, to the humic acid-bearing ore to facilitate liberation of the humic acid from the contaminants found in the ore. The inactive portion of the humic acid-bearing ore, including the insoluble and/or inorganic constituents, is allowed to separate and is filtered from the active, water-soluble alkali metal humic acid salt.

As previously stated, humic acid is a complex material and is comprised of several constituents having a wide range of molecular weights. Humic substances in general are defined according to their solubility and include fulvic acid, humic acid, hymatomelanic acid, ulmic acid and humic. For instance, fulvic acid is a fraction of soil organic matter, that, like humic acid, is soluble in dilute alkalis ; but, unlike humic acid, is soluble in mineral acid. It is believed that fulvic acid has a simpler chemical structure than humic acid and is a precursor of humic acid. The water-soluble alkali metal salt of humic acid obtained from the alkali metal hydroxide and oxidizing agent treatment of the humic acid-containing ore contains from about 3% to about 5% fulvic acid. It has been theorized that the shorter chain humic acid fractions and fulvic acid fractions can be absorbed by the plant wherein the acids are metabolized, and thereby release the bound macronutrient and micronutrient elements to the plant. These shorter-chained humic acid precursors therefore enhance the transport and transfer of plant primary and secondary nutrients and micronutrients from the soil to the plant. The medium chain length humic acid constituents are absorbed more slowly than the short chain humic acid and fulvic acid constituents ; the long chain humate constituents, such as ulmic acid, essentially are not absorbed. The water-soluble humic acid salts obtained by the present method contain essentially none of these high molecular weight, insoluble humic acid constituents that do not promote plant growth.

An oxidizing agent, such as hydrogen peroxide, is included in the humic acid extraction process to act as a preservative to improve the shelf-life of the concentrated alkali metal humic acid salt solution. It has been theorized that the oxidizing agent also acts both to help separate the humic acid from the non-humate contaminants in the ore and to increase the amount of short- and medium-chain humate constituents at the expense of long-chain humate constituents. As mined, leonardite ore contains long-chain, medium-chain, and short-chain humates. However, during the extraction process, the oxidizing agents may attack and rupture the naturally occurring long-chain humate polymers and partially convert the long-chain polymers into medium- and short-chain length humate polymers.

It has been found that about 15% by weight is the maximum percent of high activity humic acid solids achievable in solution. As the percent solids content increases above approximately 15% by weight, the solution is too heavily saturated and the alkali metal humic acid salt begins to precipitate. Although some present day commercial liquid humic acid products claim to contain about 15% humic acid solids, these products are in reality mixtures of a small percentage of active humic acid salts, plus a greater percentage of inactive humic acid constituents and, oftentimes, insoluble particles. The inactive and insoluble constituents do not enhance plant growth, but possess the disadvantage of plugging irrigation and spray distribution equipment.

Humic acid products extracted from manure or peat generally are not as effective in absorbing micronutrient elements as the present humic acid product. In addition, humic acid products derived from lignite will not provide substantial plant growth stimulation unless the humic acid has been partially oxidized, such that it resembles the humic acid derived from leonardite.

Obtaining humic acid by extracting a suitable humic acid-containing ore, such as leonardite, with an aqueous solution of sodium hydroxide is known. In the past, the humic acid content of the ore has been dissolved in the alkaline extracting solution, then separated from insoluble contaminants. The humic acid extract then is acidified and the humic acid precipitated from solution. By this method, the maximum amount of humic acid, as a sodium salt, dissolved in the strongly caustic extracting solution was about eight percent by weight. In addition, this process required large quantities of sodium hydroxide and water to recover humic acid in commercial operations.

A humic acid-containing solution, suitable for use in the present method is made according to the method of Example 1. This potassium humate salt exhibits excellent water-solubility and is essentially free of inactive soluble materials or insoluble inorganic materials. The humic acid is solubilized with an alkali metal hydroxide, adjusted to a high degree of alkalinity, and treated with an oxidizing agent. Then the alkali metal humate salt is separated from insoluble and inert contaminants and used, either alone or in combination with other plant nutrient components, as a concentrated liquid growth stimulant. Additionally, the process does not require the addition of ammonia or the acidification of the extract.

## EXAMPLE

Leonardite, such as the type mined from the outcrops of lignite reserves in North Dakota, is ground to a fine powder. Then approximately 1750 lbs. (793.8 kg) of the ground leonardite is thoroughly dispersed in solution comprising approximately 9800 lbs (4445.2 kg) of water, 440 lb. (199.6 kg) of 90% potassium hydroxide and 5 gal. (18.93 litres) of 30% aqueous hydrogen peroxide. The mixture is heated to 180°F (82.2°C) and agitated for 4 hours to effect extraction of the humic acid from the ore and conversion of the humic acid to a water-soluble alkali metal humate salt. Periodic additions of potassium hydroxide may be made to maintain the pH between approximately 10 and 12, and preferably at a pH of approximately 11, to assure effective extraction and solubilization of the humic acid. After the approximately 4 hrs. of agitation, the mixture is transferred to a holding tank. Any insoluble material is allowed to settle from the aqueous potassium humate salt solution over a 30 to 40 day period. The insoluble material subsequently is filtered from potassium humate solution, or alternatively, the insoluble material is removed by centrifuging the mixture followed by removal of the insoluble material by filtration. The potassium humate salt solution then is adjusted to a final pH of approximately 10 to approximately 12, and preferably to a pH of approximately 11, by the addition of potassium hydroxide. The solution also is adjusted to a humic acid salt concentration of between approximately 10% and approximately 15% by weight, and preferably to a humic acid salt concentration of approximately 12% by weight, by the addition of water.

To illustrate the plant growth effects of the liquid alkali metal humate produced according to the method of Example 1, celery seeds were germinated in soil treated with the liquid alkali metal humate. The effects of humic acid-containing materials on seed germination are similar to those for a rooted plant and resemble the effects of indole butyric acid, a well-known agent for promoting and accelerating root formations of plant clippings by unknown mechanisms. It is theorized that humic acid-containing materials, carrying macronutrient and micronutrient elements and water, move into the seed through the pore, and stimulate development of the seed. Seeds germinate faster in the presence of humic substances, but, more importantly, a higher percentage of seeds actually germinate.

In accordance with an important feature of the present invention, an alkali metal humate salt solution made according to the method of Example 1 can be mixed with a plant nutrient component, including such plant nutrients as nitrogen and/or phosphorus and/or potassium and/or either calcium phosphate or ascorbic acid, to improve the yield of agricultural and horticultural crops. Nitrogen, phosphorus and potassium are known as the primary macronutrient elements required both as plant nutrients and to improve soil texture. The addition of plant nutrients such as nitrogen and/or phosphorus and/or potassium to a solution of an alkali metal humic acid salt makes the plant nutrients more available to the plants through a more efficient transport mechanism attributed to the alkali metal humate salt. The plant nutrients therefore are more efficiently transported into the plant by interaction with the alkali metal humate salt for more efficient use by the plant.

Calcium is known to be an important element both in regard to plant nutrient requirements and in regard to improving soil texture. The addition of calcium phosphate to an aqueous alkali metal humic acid salt solution makes the calcium more available to the plants because the calcium ion replaces potassium ions in the humate salt and is sequestered by the humic acid salt. The calcium ion therefore is transported into the plant with the humate salt for more efficient plant use in comparison to the highly water-insoluble and non-transportable calcium phosphate. The exchanging of potassium ions of the humate salt for a calcium ion both releases the calcium ion for more efficient plant use and also frees the phosphate portion of the insoluble calcium phosphate to the soil, allowing the plant to help fulfill its phosphate needs. In addition, according to the method of the present invention, the amount of calcium phosphate added to the water-soluble humate is not great enough to materially affect the water-solubility of the humate salt.

Ascorbic acid also is known as an additive to enhance plant growth and as an additive to extend the life of freshly cut flowers. Although the positive benefits of humic acid, calcium phosphate and ascorbic acid upon plant growth are known, a mixture comprising a solution of a humic acid salt with either calcium phosphate or ascorbic acid affords increased agricultural and horticultural crop yields that are both surprising and unexpected.

Surprisingly, TABLE IV shows that the mixture of a potassium humate salt and a plant nutrient component actually improves plant uptake of both the plant nutrients, such as nitrogen, phosphorus, and potassium, that are included in the mixture and improves plant uptake of the micronutrient elements that naturally occur in the soil. TABLE IV shows the improved plant uptake of primary nutrients and micronutrients in leaf tissue samples analyzed after 4 weeks of growth in soil treated with a solution including 12% potassium humate and a 6-14-14 plant nutrient component compared to plants grown in soil treated with only a 20-20-20 fertilizer. It is observed that using a lower analysis plant nutrient component (6-14-14) showed a greater nutrient uptake by the plant. In addition, the plant also took in greater amounts of the micronutrients, manganese, iron and magnesium, that were naturally found in the soil.

## TABLE IV

### PLANT NUTRIENT UPTAKE

(leaf analysis after 4 weeks growth)

| Element | 12% Potassium Humate and 6-14-14 Plant Nutrient | 20-20-20 Plant Nutrient |
|---|---|---|
| Nitrogen | 6.8% | 6.5% |
| Phosphorus | 0.72% | 0.59% |
| Potassium | 4.45% | 3.35% |
| Manganese | 0.52% | 0.48% |
| Iron | 220 ppm | 205 ppm |
| Magnesium | 400 ppm | 320 ppm |

The particular plant nutrient component including nitrogen and/or phosphorus and/or potassium added to the alkali metal humate salt is not particularly limited, however the plant nutrient component should be sufficiently water-soluble such that from 0% to about 20% of nitrogen (calculated as N), and especially from 0% to about 15% nitrogen ; and/or from 0% to about 45% of phosphorus (calculated as $P_2O_5$), and especially from 0% to about 30% phosphorus ; and/or from 0% to about 25% of potassium (calculated as $K_2O$), and especially from 0% to 15% potassium, can be incorporated into the alkali metal humate solution. However, it has been found that if the plant nutrient component is present above about 50% by weight of the entire composition, that plant nutrient components begin to precipitate out of solution. Therefore, the maximum amount of plant nutrient component that can be incorporated into the composition of the present invention is 50% by weight, and preferably the maximum amount of plant nutrient component present in the composition is about 30%. To observe the benefits and advantages of the present invention, the plant nutrient component should be present in an amount of at least 0.05% by weight of the total composition. Examples of plant nutrient components that possess sufficient solubility to be incorporated into the alkali metal humate salt solution, either alone or in combination, include, but are not limited to, ammonium nitrate, potassium chloride, ammonium phosphates, potassium phosphates, water-soluble polyphosphates, potassium hydroxide, potassium nitrate, potassium sulfate, sodium nitrate, potassium carbonate, ammonium sulfate, calcium nitrate and ammonium chloride.

Furthermore, it is expected that suitable amounts of micronutrients also could be included in the plant nutrient component of the liquid composition of the present invention in order to improve the crop yield of agricultural and horticultural crops. TABLE IV shows the improved uptake of naturally occurring micronutrients by plants where the potassium humate salt is incorporated into the soil. It is expected that any water-soluble micronutrient plant nutrient can be incorporated into the liquid potassium humate solution of the present invention. Such water-soluble micronutrient plant nutrients include, but are not limited to, the water-soluble salts of iron, boron, manganese, magnesium, copper, zinc, and molybdenum, like the sulfate, nitrate, chloride, oxide, carbonate, chelate, and borate salts of the micronutrient plant nutrients. Each of these micronutrient plant nutrients

8

can be included in the liquid potassium humate salt in a sufficient amount to provide the particular crop with its micronutrient needs. Generally, a micronutrient element is present in the potassium humate solution in an amount of about 1% by weight or less, based on the weight of the micronutrient element, such as iron.

To further demonstrate the new and unexpected results achieved by the present invention, tomato plants were germinated in two fields, each treated with 200 lb/acre (90.7 kg/acre) of nitrogen (as N) before planting. In one field, the preplant fertilization program also included incorporating 2 gallons/acre (7.57 litres/acre) of the 12% alkali metal humic acid salt of Example 1 into the soil. (1 acre is equal to 4046.86 m²). TABLE V shows the beneficial effect provided by the potassium humate salt and nitrogen fertilizer combination on the crop yield of these drip irrigated fields. As illustrated in TABLE V, the tomato plants of Example 12 were planted in the field treated with both the nitrogen fertilizer and the potassium humate salt, whereas the tomato plants of Example 11 were grown in a field treated only with the nitrogen fertilizer.

## TABLE V

### EFFECT OF 12% POTASSIUM HUMATE
### ON DRIP IRRIGATION OF TOMATOES

| EXAMPLE | PRE-PLANT N (LBS/ACRE) | 12% POTAS-SIUM HUMATE (GAL/ACRE) | YIELD-25 LB.BOX PER ACRE EARLY* | TOTAL | FRUIT WT. OUNCES | PERCENT MARKET-ABLE FRUIT |
|---------|------------------------|-----------------------------------|----------------------------------|-------|------------------|----------------------------|
| 11. | 200 | 0 | 1242 | 2745 | 6.8 | 73.8 |
| 12. | 200 | 2 | 1491 | 3196 | 7.6 | 75.4 |

*Early - First three pickings.

From TABLE V it is observed that the early yield of 25 lb. (11.3 kg) boxes of tomatoes per acre increased 20% and the total yield of 25 lb. (11.3 kg) boxes of tomatoes per acre increased about 16% by treating the planting fields with both a liquid potassium humate salt and a fertilizer component including a nitrogen compound over a field treated only with the nitrogen fertilizer. Similarly, the weight per tomato and the percent marketable fruit increased.

TABLE VI further demonstrates the new and unexpected results provided by the method of the present invention, wherein the alkali metal salt of humic acid used in conjunction with a plant nutrient component increases both the number and weight of Heinz 1350 tomatoes. It is seen that

9

TABLE VI

EFFECTS OF ADDING 12% POTASSIUM HUMATE AND/OR

3-15-0 FERTILIZER TO FLUID SOWING GEL ON

HEINZ 1350 TOMATOES

| EXAMPLE | TREAT- MENT | CONCEN- TRATION | NUMBER RED | WEIGHT RED KG | NUMBER GREEN | WEIGHT GREEN | TOTAL WEIGHT |
|---|---|---|---|---|---|---|---|
| 13. | Un- treated | | 71.40 | 10.14 | 150.00 | 15.86 | 26.00 |
| 14. | 3-15-0 Ferti- lizer | 160 ppm P$_2$O$_5$ | 92.20 | 13.13 | 190.80 | 18.70 | 31.83 |
| 15. | 12% Po- tassium Humate | 1.0% | 106.20 | 15.71 | 208.60 | 20.91 | 36.63 |
| 16. | 12% Po- tassium Humate 3-15-0 Ferti- lizer | 1.0% + 160 ppm P$_2$O$_5$ | 110.20 | 16.36 | 237.00 | 24.24 | 40.59 |

the addition of 3-15-0 plant nutrient (3% nitrogen, as N ; 15% phosphorus as P$_2$O$_5$ ; and 0% potassium, as K$_2$O) alone to the fluid sowing gel increases the number of red and green tomatoes by 29% and 27% respectively (Example 14), and the addition of a 1.0% by weight of potassium humate, from a 12% potassium humate solution made by the method of Example 1, increases the number of red and the number of green tomatoes by about 48% and 39% respectively (Example 15). However, surprisingly and unexpectedly, treating the tomatoes with a solution including both the 3-15-0 plant nutrient component and the potassium humate solution demonstrated a 55% and a 58% increase, respectively, in the number of red and the number of green tomatoes (Example 16). Similarly, an increase of 56% in the total weight of the tomatoes is observed for tomatoes treated with both the 3-15-0 plant nutrient and the 12% potassium humate (Example 16), compared to a 45% increase in weight when only the 12% humate is used (Example 15), and a 22% increase when only the 3-15-0 plant nutrient is used (Example 14).

Similarly, Table VII illustrates the positive synergistic effect upon the yield of Heinz 1350 tomatoes by adding a 12% potassium humate salt and a 3-15-0 plant nutrient solution to the fluid sowing gel germination medium of the tomatoes. The addition of the potassium humate alone increased the number of tomato plants finally emerged (Example 18) but the total weight of the fruit and the total weight of fruit per plant was not significantly increased. However, Example 19, illustrating the addition of a solution including both an alkali metal humic acid salt and a 3-15-0 plant nutrient to the pregermination medium although showing a decrease in the total number of plants emerging also exhibited a substantial increase in weight per tomato of approximately 56%, and in number of tomatoes per plant of approximately 16% in comparison to tomato obtained from untreated Example 17. Furthermore, the addition of a liquid alkali metal humic acid salt and a 3-15-0 plant nutrient product to the fluid sowing gel shows increases of about 30% in total number of plants at harvest compared to the untreated tomato plants and of about 10% in total number of plants at harvest compared to tomato plants treated only with the 12% potassium humate solution.

## TABLE VII

### THE EFFECT OF ADDING 12% LIQUID POTASSIUM HUMATE AND/OR 3-15-0 FERTILIZER TO THE FLUID SOWING GEL ON EMERGENCE, GROWTH AND YIELD OF HEINZ 1350 TOMATOES

| EXAMPLE | TREATMENT | NO. PLANTS FINAL EMER. | TOTAL WT. FRUIT (KG.) | TOTAL WT. FRUIT PER PLANT (KG.) | NO. PLANTS AT HARVEST |
|---------|-----------|------------------------|------------------------|----------------------------------|------------------------|
| 17. | Untreated | 14.40 | 26.00 | 2.24 | 11.80 |
| 18. | 12% Potassium Humate | 16.00 | 21.20 | 2.52 | 14.00 |
| 19. | 12% Potassium Humate + Fertilizer 3-15-0 | 14.80 | 40.59 | 2.60 | 15.40 |

(Average of five replications.)

Comparative tests performed on peppers are illustrated in Examples 20-23 of Table VIII. In these trials, the 9-45-15 (9% nitrogen, 45% phosphorus. and 15% potassium) plant nutrient and/or alkali metal humic acid salt solution were incorporated into a fluid sowing gel and applied to the transplant water of pepper plants. In regard to peppers, both the potassium humate salt and the 9-45-15 plant nutrient, when used alone, increased the fresh and dry weight of the tops and the dry weight of the roots (Examples 21 and 22). However, the addition of a solution including the potassium humic acid salt and a 9-45-15 plant nutrient to the growth medium (Example 23) unexpectedly provided further yield increases.

## TABLE VIII

### EFFECTS OF ADDING POTASSIUM HUMATE AND/OR FERTILIZER
### TO THE TRANSPLANT WATER OF EARLY CALWONDER PEPPERS

| EXAMPLE | TREATMENT | CONCEN-TRATION | FRESH WEIGHT TOPS (GM) | DRY WEIGHT TOPS (GM) | DRY WEIGHT ROOTS (GM) |
|---------|-----------|----------------|------------------------|----------------------|------------------------|
| 20. | Untreated | | 5.24 | 0.65 | 0.49 |
| 21. | 12% Potassium Humate Salt | 2.0% | 6.13 | 0.77 | 0.52 |
| 22. | 9-45-15 | 4.0% | 13.10 | 1.39 | 0.65 |
| 23. | 12% Potassium Humate Salt + 9-45-15 | 2.0% 4.0% | 13.93 | 1.48 | 0.91 |

From TABLE VIII, the advantageous effect of adding both the liquid potassium humate and a 9-45-15 plant nutrient to the transplant water of Calwonder peppers, such that the transplant water contained 2.0% (v/u) of the 12% potassium humate and 4% of the 9-45-15 plant nutrient component, is most dramatically demonstrated in the dry weight of the roots. From Example 21, treating the pepper plants only with the potassium humate salt, the dry weight of the roots increases 0.03 g, or only about 6% over untreated control Example 20. Example 22, treating the plants only with the 9-45-15 plant nutrient, shows a 0.16 g increase in dry weight of the roots, or about a 32% increase. However, surprisingly and unexpectedly, Example 23, treating the pepper plants with both the potassium humate salt and the 9-45-15 plant nutrients gave a 0.42 g increase in dry root weight, or about an 86% improvement over the untreated control Example 20. Similar improved results are observed for the fresh and dry weights of the tops of the pepper plants.

To further demonstrate the new and unexpected results of the present invention, carrot seeds were pregerminated in the presence of a humic acid salt, as a water-soluble alkali metal humate salt made according to the method of Example 1, and calcium phosphate in aerated columns of water for 4 days to determine the effect of these additives upon eventual crop yield. As illustrated in Table IX, the carrot seeds of Example 24 were pregerminated in plain tap water, whereas the seeds in Example 25 were pregerminated in a 1% by volume aqueous solution of the water-soluble humate salt made according to the method of Example 1, the seeds in Example 26 were pregerminated in the presence of 160 PPM calcium phosphate and the seeds of Example 27 were pregerminated in a 1% by volume solution of the water-soluble humate sald made according to the method of Example 1 and 160 PPM calcium phosphate. After germination, the carrot seeds were planted in flats.

## TABLE IX
### EFFECT OF HUMIC ACID AND CALCIUM PHOSPHATE UPON
### PREGERMINATION AND YIELD OF CARROTS

| EXAMPLE | TREATMENT | CONCENTRATION | ROOT NUMBERS | ROOT WT (KG) |
|---|---|---|---|---|
| 24 | RAW SEED | | 82.5 | 4.6 |
| 25 | HUMIC ACID | 1% by volume of a 12% by weight humic acid salt solution | 93 | 6.3 |
| 26 | CALCIUM PHOSPHATE | 160 PPM | 81.5 | 4.5 |
| 27 | HUMIC ACID | 1% by volume of a 12% by weight humic acid salt solution PLUS CALCIUM PHOSPHATE 160 PPM | 100 | 8.5 |

The addition of calcium phosphate to the aerated columns of water (Example 26), decreases root numbers by about 1% and root weight by about 2% in comparison to Example 24, wherein no additives are included in the aerated columns of water. In comparison, the addition of an alkali metal humic acid salt solution to the water (Example 25) shows about a 13% increase in carrot root numbers and about a 37% increase in root weight over the untreated Example 24. However, in accordance with the present invention, the addition of both an alkali metal humic acid salt solution and calcium phosphate to the pregermination water (Example 27) increases root numbers about 21% and root weight about 85% over the untreated Example 24. Such synergistic results are totally unexpected considering the modest increase in root numbers and root weight observed in Example 25, using humic acid salt solution alone, and the actual decrease in root numbers and root weight observed in Example 26, using calcium phosphate alone.

Similarly, Table X illustrates the positive synergistic effect upon the yield of peppers by adding ascorbic acid and a humic acid salt solution to a pepper seed germination medium. The addition of ascorbic acid alone to the pregermination medium (Example 29) results in a decrease in the weight of the individual peppers, and modest increases in total number of peppers and in numbers of peppers per plant compared to untreated control Example 28. Example 30, illustrating the addition of only an alkali metal humic acid salt solution to the pregermination medium exhibits substantial increases in weight per pepper of approximately 67%, in total number of peppers of approximately 62%, and in number of peppers per plant of approximately 19% in comparison to untreated Example 28. However, the addition of an alkali metal humic acid salt solution product and ascorbic acid to the seed germination medium shows surprising and unexpected increases of about 112% in weight per pepper, of about 84% in number of peppers, and of about 42% in number of peppers per plant in comparison to untreated Example 28.

## TABLE X

### EFFECT OF HUMIC ACID AND ASCORBIC ACID UPON YIELDS OF PEPPERS

| EXAMPLE | TREAT-MENT | CONCEN-TRATION | WEIGHT/FRUIT | NO. FRUIT | NO. FRUIT PLANT |
|---------|------------|----------------|--------------|-----------|-----------------|
| 28 | UN-TREATED | . | 1.06 | 30.8 | 29.65 |
| 29 | ASCORB-IC ACID | 660 PPM | 0.96 | 32.4 | 30.22 |
| 30 | HUMIC ACID | 1% by volume of a 12% by wt. humic acid salt solution | 1.77 | 49.8 | 35.19 |
| 31 | HUMIC ACID | 1% by volume of a 12 by wt. humic acid salt solution; | 2.25 | 56.8 | 42.10 |
|  | ASCORBIC ACID | 660 PPM | | | |

Comparative tests performed on tomatoes are illustrated in Example 32-35 of Table XI. In these trials, the ascorbic acid and/or an alkali metal humic acid salt solution were incorporated into a fluid drilling gel and applied to the roots of transplanted tomato plants. In regard to tomatoes, both ascorbic acid and the alkali metal humic acid salt solution, when used alone, increased both the number and weight of red and green tomatoes (Examples 33 and 34). However, the addition of an alkali metal humic acid salt solution and ascorbic acid to the growth medium (Example 35) unexpectedly provided further yield increases.

EP 0 282 250 B1

### TABLE XI
#### EFFECT OF HUMIC ACID AND
#### ASCORBIC ACID UPON YIELDS OF TOMATOES

| EXAMPLE | TREAT-MENT | CONCEN-TRATION | # RED | WT-RED | # GREEN | WT-GREEN |
|---------|------------|----------------|-------|--------|---------|----------|
| 32 | UN-TREATED | | 71.4 | 10.14 | 150 | 15.86 |
| 33 | ASCORB-IC ACID | 160 PPM | 92.2 | 13.13 | 190.8 | 18.70 |
| 34 | HUMIC ACID | 1% by volume of a 12% by wt. humic acid salt solution | 106.2 | 15.70 | 208.6 | 20.91 |
| 35 | HUMIC ACID plus | 1% by volume of a 12% by wt. humic acid salt solution; | 110.2 | 16.30 | 237 | 24.24 |
| | ASCORBIC ACID | 160 PPM | | | | |

Examples 36-39 in Table XII illustrate the effects of adding an alkali metal humic acid salt solution and/or ascorbic acid to the seed germination liquor of sweet corn. In each of the Examples 36-39 germination was initiated for 24 hrs. in an untreated aerated water system maintained at 25°C. The germination water was changed after 1 hr., 4 hrs. and 8 hrs. after the beginning of the germination treatment. The seeds then were placed in the appropriate alkali metal humic acid salt and/or ascorbic acid treatment for 24 hrs. at 27°C. Examples 36-38 show that sweet corn yields are not materially improved by germinating the sweet corn seeds in water containing only ascorbic acid or a humic acid salt.

However, in Example 39, utilizing an alkali metal humic acid salt solution and ascorbic acid, demonstrated an approximately 9% increase in the total number of ears of corn and an approximately 17% increase in the total weight of the ears of corn in comparison to Examples 36 through 38.

15

TABLE XII

EFFECT OF HUMIC ACID AND

ASCORBIC ACID UPON YIELD OF SWEET CORN

| EXAMPLE | TREATMENT | CONCENTRATION | # EARS | TOTAL WT OF EARS |
|---------|-----------|---------------|--------|------------------|
| 36 | UNTREATED | | 16.8 | 3.50 |
| 37 | ASCORBIC ACID | 330 PPM | 16.6 | 3.21 |
| 38 | HUMIC ACID | 1% by volume of a 12% by wt. humic acid salt solution | 16.6 | 3.57 |
| 39 | HUMIC ACID plus ASCORBIC ACID | 1% by volume of a 12% by wt. humic acid salt solution; 330 PPM | 18.4 | 4.20 |

Therefore, in accordance with an important feature of the method of the present invention, a concentrated liquid alkali metal humic acid salt-containing product can be combined with either calcium phosphate or ascorbic acid to substantially increase the yield of agricultural and horticultural crops. Surprisingly, it has been found that the humic acid salt solution acts synergistically with either ascorbic acid or the calcium phosphate to increase crop yields, however, a mixture of the alkali metal humic acid salt solution, ascorbic acid, and calcium phosphate did not provide the unexpected increases in crop yield observed in humic acid salt-calcium phosphate and humic acid salt-ascorbic acids mixtures. For example, adding a solution containing 1% by volume of a 12% by weight humic acid solution, 330 ppm ascorbic acid and 160 ppm calcium phosphate to the seed germination medium of sweet corn produced only 16.0 ears of corn, having a total weight of 3.47. Therefore, adding a solution containing humic acid, ascorbic acid and calcium phosphate demonstrated an approximately 5% decrease in total number of fruit and a 1% decrease in total weight of fruit compared to Example 36, an untreated sample. Likewise, the solution containing each of three ingredients showed an approximately 13% decrease in total number of fruit and an approximately 21% decrease in total weight of the fruit compared to Example 39, that utilized only an alkali metal humic acid salt solution and ascorbic acid.

Therefore, a concentrated liquid alkali metal humic acid salt-containing product can be combined with a plant nutrient component to substantially increase the yield of agricultural and horticultural crops. The plant nutrient component can include nitrogen and/or phosphorus and/or potassium and/or either calcium phosphate or ascorbic acid. It is also envisioned that the plant nutrient component can include other secondary plant nutrients, like sulfur, and/or plant micronutrients such as, but not limited to, iron, boron, zinc, manganese, magnesium, molybdenum and copper. Surprisingly, it has been found that the alkali metal humic acid salt solution acts synergistically with the plant nutrient component to increase the yields of both agricultural and horticultural crops, in regard to number of fruit per plant, weight per individual fruit, number of emerged plants and overall plant quality.

It is to be understood that the method is intended to supplement, and not necessarily replace, the basic fertilizer needs of the various agricultural and horticultural crops. The liquid alkali metal humic acid salt product, made according to the method of the present invention, is not fertilizer, but a complement to fertilizer. The fertilizer acts as the primary nutrient source for both plants and microflora, and the humic acid salt acts as a transport mechanism for moving the fertilizer and micronutrient elements from the soil to the plant. Therefore, the alkali metal humic acid salt product, in conjunction with a plant nutrient component, should be used in conjunction with a fertilizer, whenever possible. The fertilizer provides the plant with both the primary, secondary and/or micronutrients, and the mixture of the alkali metal humate salt and plant nutrient component provide a transport mechanism for those nutrients in an area, and in a sufficient amount, such that the plant can immediately make use of the nutrients. It is well-documented that humic acid and humate salts have the ability to absorb fertilizer components and regulate fertilizer release to plants, ultimately making the fertilizer more effective. As a result, judicious use of the highly-active liquid alkali metal humic acid salt products, either alone or in conjunction with plant nutrient components, including such plant nutrients as nitrogen and/or phosphorus and/or potassium and/or micronutrient elements and/or either calcium phosphate or ascorbic acid, will improve plant growth performance in marginally fertile soils or soils with low native organic matter and will improve yields of crops grown in arid region of the world.

The liquid alkali metal humic acid salt-containing product, plus the addition of a plant nutrient component, serves to assist the plant and the soil to more fully utilize both the included plant nutrient component, the fertilizer separately added to the soil and the naturally-occurring primary, secondary and micronutrients in the soil for improved plant growth and crop yields. The low percentages of alkali metal humic acid salt and plant nutrient component necessary to improve crop yields, make the method easy and economical to implement, while making better use of agricultural resources through improved seed germination, nutrient use and crop yields. The method can be used on any seeds, and is not limited to a specific species. The method can be used to increase the crop yields of food crops such as soybeans, peas, potatoes, eggplant, cucumbers, melons, squash, cabbage, cauliflower, small grains, sweet potatoes, peanuts, strawberries and citrus, in addition to the agricultural and horticultural crops illustrated in the Examples. The method also can be used on non-food crops, such as tobacco, ornamentals, turf and for grass seeding cuts along highways.

## Claims

1. A liquid crop stimulant comprising from about 10% by weight to about 15% by weight of an alkali metal salt of humic acid ; from about 0.05% by weight to about 50% by weight of a plant nutrient ; and water ; characterised in that the alkali metal salt of humic acid is obtained only by the alkali metal hydroxide treatment of an oxidised humic acid containing ore.

2. A crop stimulant as claimed in claim 1, characterised in that the method of making the alkali metal salt of humic acid comprises adding a crushed oxidised humic acid-containing ore to a mixture comprising an alkali metal hydroxide, an oxidizing agent and water ; heating the aqueous mixture to a temperature of about 160°F (71.1°C) to about 200°F (93.3°C) ; agitating the mixture for a time sufficient to obtain a solution of a water-soluble salt of humic acid ; adding a sufficient amount of an alkali metal hydroxide to maintain the mixture at a pH from about 10 to about 12 ; separating insoluble materials from the alkali metal salt of humic acid ; and adding water to adjust the amount of alkali metal salt of humic acid in the solution to about 10% by weight to about 15% by weight.

3. A crop stimulant as claimed in either claim 1 or claim 2, characterised in that the oxidised humic acid-containing ore is leonardite.

4. A crop stimulant as claimed in any one of the preceding claims, characterised in that the alkali metal is lithium, sodium, potassium or mixtures thereof, preferably potassium.

5. A crop stimulant as claimed in any one of claims 2 to 4, characterised in that the oxidizing agent is hydrogen peroxide, sodium perborate, sodium peroxycarbonate or mixtures thereof, preferably hydrogen peroxide.

6. A crop stimulant as claimed in any one of the preceding claims, characterised in that the alkali metal salt of humic acid is present from about 11% by weight to about 13% by weight.

7. A crop stimulant as claimed in any one of the preceding claims, characterised in that the plant nutrient comprises nitrogen, phosphorus, potassium or either calcium phosphate or ascorbic acid ; or mixtures thereof.

8. A crop stimulant as claimed in any one of the preceding claims, characterised in that the plant nutrient comprises from 0% to about 20%, preferably 0% to about 15%, by weight nitrogen, as N ; from 0% to about 45%, preferably 0% to about 30%, by weight phosphorus, as $P_2O_5$ ; from 0% to about 20%, preferably 0% to about 15%, by weight potassium, as $K_2O$ ; or from 0% to about 2%, preferably 0% to about 1%, by weight of either calcium phosphate or ascorbic acid ; or mixtures thereof.

9. A crop stimulant as claimed in any one of the preceding claims, characterised in that the plant nutrient further comprises a micronutrient element being iron, boron, manganese, magnesium, zinc, copper, or combinations thereof, preferably in an amount of about 1% by weight or less.

10. A method of stimulating the growth of a plant characterised in that it comprises adding a crop stimulant as claimed in any one of the preceding claims to a seed germination medium or growth medium of an agricultural or horticultural crop in the range of about 0.1% by weight to about 2% by weigh of the water-soluble alkali metal salt of humic acid to stimulate the growth of the agricultural or horticultural crop.

11. A method as claimed in claim 10, characterised in that the composition is added to the seed germination medium or growth medium of an agricultural or horticultural crop in the range of about 0.4% by weight to about 1.5% by weight of the water-soluble alkali metal salt of humic acid to stimulate the growth of the agricultural or horticultural crop.

**Ansprüche**

1. Flüssiges Feld- oder Gartenfruchtstimulans, umfassend etwa 10 bis etwa 15 Gew.-% eines Alkalimetallsalzes von Huminsäure, etwa 0,05 bis etwa 50 Gew.-% eines Pflanzennährstoffs und Wasser, **dadurch gekennzeichnet**, daß das Alkalimetallsalz von Huminsäure nur durch die Alkalimetallhydroxidbehandlung eines oxidierten huminsäurehaltigen Erzes erhalten wird.

2. Feld- oder Gartenfruchtstimulans nach Anspruch 1, **dadurch gekennzeichnet**, daß das Verfahren zur Herstellung des Alkalimetallsalzes von Huminsäure die Zugabe eines zerkleinerten, oxidierten huminsäurehaltigen Erzes zu einer Mischung, umfassend ein Alkalimetallhydroxid, ein Oxidationsmittel und Wasser ; das Erwärmen der wäßrigen Mischung auf eine Temperatur von etwa 160°F (71,1°C) bis etwa 200°F (93,3°C) ; das Rühren der Mischung über eine Zeit, die ausreichend ist, um eine Lösung eines wasserlöslichen Salzes von Huminsäure zu erhalten ; die Zugabe einer ausreichenden Menge eines Alkalimetallhydroxids, um die Mischung bei einem pH von etwa 10 bis etwa 12 zu halten ; die Trennung von unlöslichen Materialien von dem Alkalimetallsalz von Huminsäure ; und die Zugabe von Wasser zur Einstellung der Menge des Alkalimetallsalzes der Huminsäure in der Lösung auf etwa 10 bis etwa 15 Gew.-% umfaßt.

3. Feld- oder Gartenfruchtstimulans nach Anspruch 1 oder 2, **dadurch gekennzeichnet**, daß das oxidierte huminsäurehaltige Erz Leonardit ist.

4. Feld- oder Gartenfruchtstimulans nach einem der vorhergehenden Ansprüche, **dadurch gekennzeichnet**, daß das Alkalimetall Lithium, Natrium, Kalium oder Mischungen daraus, vorzugsweise Kalium, ist.

5. Feld- oder Gartenfruchtstimulans nach einem der Ansprüche 2 bis 4, **dadurch gekennzeichnet**, daß das Oxidationsmittel Wasserstoffperoxid, Natriumperborat, Natriumperoxycarbonat oder Mischungen daraus, vorzugsweise Wasserstoffperoxid, ist.

6. Feld- oder Gartenfruchtstimulans nach einem der vorhergehenden Ansprüche, **dadurch gekennzeichnet**, daß das Alkalimetallsalz von Huminsäure in einer Menge von etwa 11 bis etwa 13 Gew.-% vorliegt.

7. Feld- oder Gartenfruchtstimulans nach einem der vorhergehenden Ansprüche, **dadurch gekennzeichnet**, daß der Pflanzennährstoff Stickstoff, Phosphor, Kalium oder entweder Calciumphosphat oder Ascorbinsäure oder Mischungen daraus umfaßt.

8. Feld- oder Gartenfruchtstimulans nach einem der vorhergehenden Ansprüche, **dadurch gekennzeichnet**, daß der Pflanzennährstoff 0 bis etwa 20 Gew.-%, vorzugsweise 0 bis etwa 15 Gew.-% Stickstoff als N ; 0 bis etwa 45 Gew.-%, vorzugsweise 0 bis etwa 30 Gew.-% Phosphor als $P_2O_5$ ; 0 bis etwa 20 Gew.-%, vorzugsweise 0 bis etwa 15 Gew.-% Kalium als $K_2O$ ; oder 0 bis etwa 2 Gew.-%, vorzugsweise 0 bis 1 Gew.-% entweder von Calciumphosphat oder Ascorbinsäure oder Mischungen daraus umfaßt.

9. Feld- oder Gartenfruchtstimulans nach einem der vorhergehenden Ansprüche, **dadurch gekennzeichnet**, daß der Pflanzennährstoff weiterhin ein Mikronährstoffelement, das Eisen, Bor, Mangan, Magnesium, Zink, Kupfer oder eine Kombination daraus ist, vorzugsweise in einer Menge von etwa 1 Gew.-% oder weniger, umfaßt.

10. Verfahrenen zum Stimulieren des Wachstums einer Pflanze, **dadurch gekennzeichnet**, daß es die Zugabe eines Feld- und Gartenfruchtstimulans nach einem der vorhergehenden Ansprüche zu einem Samenkeimmedium oder Wachstumsmedium einer Feld- oder Gartenfrucht im Bereich von etwa 0,1 bis etwa 2 Gew.-% des wasserlöslichen Alkalimetallsalzes von Huminsäure zum Stimulieren des Wachstums der Feld- oder Gartenfrucht umfaßt.

11. Verfahren nach Anspruch 10, **dadurch gekennzeichnet**, daß die Zusammensetzung zu dem Samenkeimmedium oder Wachstumsmedium einer Feld- oder Gartenfrucht im Bereich von etwa 0,4 bis etwa 1,5 Gew.-% des wasserlöslichen Alkalimetallsalzes von Huminsäure gegeben wird, um das Wachstum der Feld- oder Gartenfrucht zu stimulieren.

**Revendications**

1. Un stimulant liquide pour plantes de culture comprenant environ 10% en poids à environ 15% en poids d'un sel de métal alcalin de l'acide humique ; environ 0,05% en poids à environ 50% en poids d'une substance nutritive pour plantes ; et de l'eau ; caractérisé en ce que le sel de métal alcalin de l'acide humique est obtenu seulement par traitement au moyen d'un hydroxyde de métal alcalin d'un minerai contenant l'acide humique oxydé.

2. Un stimulant pour plantes de culture selon la revendication 1, caractérisé en ce que la méthode de fabrication du sel de métal alcalin de l'acide humique comprend l'addition d'un minerai contenant l'acide humique oxydé, broyé, à un mélange comprenant un hydroxyde de métal alcalin, un agent oxydant et de l'eau ; le chauffage du mélange aqueux à une température d'environ 160°F (71,1°C) à environ 200°F (93,3°C) ; l'agitation du mélange pendant un temps suffisant pour obtenir une solution d'un sel soluble dans l'eau de l'acide humique ; l'addition d'une quantité suffisante d'un hydroxyde de métal alcalin pour maintenir le mélange à un pH d'environ 10 à environ 12 ; la séparation des matières insolubles du sel de métal alcalin de l'acide humique ; et l'addition d'eau pour ajuster la quantité de sel de métal alcalin de l'acide humique dans la solution à environ 10% en poids à environ 15% en poids.

3. Un stimulant pour plantes de culture selon la revendication 1 ou 2, caractérisé en ce que le minerai contenant l'acide humique oxydé est la léonardite.

4. Un stimulant pour plantes de culture selon l'une quelconque des revendications précédentes, caractérisé en ce que le métal alcalin est le lithium, le sodium, le potassium ou un mélange de ceux-ci, de préférence le potassium.

5. Un stimulant pour plantes de culture selon l'une quelconque des revendications 2 à 4, caractérisé en ce que l'agent oxydant est le peroxyde d'hydrogène, le perborate de sodium, le peroxycarbonate de sodium ou un mélange de ceux-ci, de préférence le peroxyde d'hydrogène.

6. Un stimulant pour plantes de culture selon l'une quelconque des revendications précédentes, caractérisé en ce que le sel de métal alcalin de l'acide humique est présent en quantité d'environ 11% en poids à environ 13% en poids.

7. Un stimulant pour plantes de culture selon l'une quelconque des revendications précédentes, caractérisé en ce que la substance nutritive pour plantes comprend l'azote, le phosphore, le potassium ou soit le phosphate de calcium soit l'acide ascorbique ; ou leurs mélanges.

8. Un stimulant pour plantes de culture selon l'une quelconque des revendications précédentes, caractérisé en ce que la substance nutritive pour plantes comprend 0% à environ 20%, de préférence 0% à environ 15% en poids d'azote, exprimé en N ; 0% à environ 45%, de préférence 0% à environ 30% en poids de phosphore, exprimé en $P_2O_5$ ; 0% à environ 20%, de préférence 0% à environ 15% en poids de potassium, exprimé en $K_2O$, ou 0% à environ 2%, de préférence 0% à environ 1% en poids soit de phosphate de calcium soit d'acide ascorbique ; ou des mélanges de ceux-ci.

9. Un stimulant pour plantes de culture selon l'une quelconque des revendications précédentes, caractérisé en ce que la substance nutritive pour plantes comprend en outre un élément micronutritif qui est du fer, du bore, du manganèse, du magnésium, du zinc, du cuivre, ou des combinaisons de ceux-ci, de préférence en quantité d'environ 1% en poids ou moins.

10. Une méthode de stimulation de la croissance d'une plante, caractérisée en ce qu'elle comprend l'addition d'un stimulant pour plantes de culture selon l'une quelconque des revendications précédentes à un milieu de germination de semences ou à un milieu de croissance d'une plante de culture agricole ou horticole dans l'intervalle d'environ 0,1% en poids à environ 2% en poids de sel de métal alcalin soluble dans l'eau de l'acide humique pour stimuler la croissance de la plante de culture agricole ou horticole.

11. Une méthode selon la revendication 10, caractérisée en ce que la composition est ajoutée au milieu de germination des semences ou au milieu de croissance d'une plante de culture agricole ou horticole dans l'intervalle d'environ 0,4% en poids à environ 1,5% en poids de sel de métal alcalin soluble dans l'eau de l'acide humique pour stimuler la croissance de la plante de culture agricole ou horticole.

THEORETICAL STRUCTURE OF HUMIC ACID

FIG. 1

EP 0 282 250 B1

OXIDATION SITES AVAILABLE FOR ADSORPTION OF NUTRIENTS AND MICRONUTRIENTS

FIG. 2

21

EXCHANGE PREFERENCE FOR HUMIC ACIDS.   SATURATED WITH POTASSIUM

Fe''') Al''', ; H'') Cu'') Ni'') Co'') Zn'') Fe'') Ca'') Na') Mg'') K') NH₄') Li'

FIG. 3